# EUROPÄISCHE PATENTSCHRIFT

(11) **EP 4 272 859 B1**
(45) Veröffentlichungstag und Bekanntmachung des Hinweises auf die Patenterteilung: **05.03.2025**
(21) Anmeldenummer: 23170347.1
(22) Anmeldetag: 27.04.2023
(51) Int. Cl.: B01F 29/10, B01F 35/21, B01F 35/221

(54) **VERFAHREN UND VORRICHTUNG ZUR ÜBERWACHUNG DER BENETZUNGSHÖHE EINES MISCHBECHERS**
METHOD AND DEVICE FOR MONITORING THE WETTING HEIGHT OF A MIXING CUP
PROCÉDÉ ET APPAREIL DE SURVEILLANCE DU NIVEAU DE MOUILLAGE D'UN GOBELET MÉLANGEUR

(30) Priorität: 29.04.2022 DE 102022110524
(43) Veröffentlichungstag der Anmeldung: 08.11.2023
(73) Patentinhaber: Marco Systemanalyse und Entwicklung GmbH, 85221 Dachau (DE)
(72) Erfinder: REUTER, Martin, 85221 Dachau (DE)
(74) Vertreter: Manitz Finsterwald Patent- und Rechtsanwaltspartnerschaft mbB

(56) Entgegenhaltungen:
- DE-T5- 112018 005 502
- JP-A- 2006 082 017
- US-A1- 2007 025 180
- US-A1- 2021 086 153

## Beschreibung

Die vorliegende Erfindung betrifft ein Verfahren zur Überwachung der Benetzungshöhe eines Mischbechers in einem Zentrifugalmischer.

Zum Mischen unterschiedlicher Medien werden im Stand der Technik Zentrifugalmischer, auch Rotationsmischer oder Planetenmischer genannt, eingesetzt, bei denen ein mit Medien befüllter Mischbecher nach dem Prinzip der dualen asymmetrischen Zentrifuge um zwei schräg zueinander verlaufende Drehachse in Rotation versetzt wird. Durch die Doppelrotation des Mischbechers (zumeist in gegenläufiger Richtung) kann eine besonders effiziente Herstellung von blasenfreien, homogenen Mischungen von Medien erfolgen, beispielsweise von Klebstoffen, Dichtstoffen, Pulvern, etc. Auch kann dieser Prozess unter Vakuum erfolgen, um die Medien bzw. das gemischte Medium während des Mischens gleichzeitig zu entgasen. Die beiden gegenläufigen Rotationen, d.h. eine Rotation des Mischbechers um seine eigene Achse und eine zusätzliche Rotation des Mischbechers um eine weitere Drehachse, die insbesondere schräg zu der ersten Drehachse verläuft, erfolgt im Stand der Technik typischerweise mit einem vorgegebenen festen Verhältnis der Drehgeschwindigkeiten, zum Beispiel 3:1. In diesem Fall kann ein gemeinsamer Antrieb verwendet werden, der beide Rotationsbewegungen über ein Getriebe bewirkt.

Bei derartigen bekannten Zentrifugalmischern besteht einerseits das Problem, dass bei zu hohen Rotationsgeschwindigkeiten Medium aus dem Inneren des Mischbechers austreten kann. Andererseits ist es für eine gute Durchmischung wünschenswert, möglichst hohe Rotationsgeschwindigkeiten vorzusehen, die jedoch wiederum die Gefahr eines Austretens von Medium aus dem Mischbecher mit sich bringen.

Dokument US 2021/086153 A1 offenbart ein Verfahren zur Überwachung eines Mischbechers in einem Zentrifugalmischer, und eine Vorrichtung gemäß dem Oberbegriff des Anspruchs 6.

Es ist deshalb die Aufgabe der vorliegenden Erfindung, ein Verfahren zur Überwachung der Benetzungshöhe eines Mischbechers in einem Zentrifugalmischer zu schaffen, mit dem die Durchmischung von Medien optimiert und ein Austreten von Medium aus dem Mischbecher zuverlässig verhindert werden kann.

Die Lösung dieser Aufgabe erfolgt durch ein Verfahren mit den Merkmalen des Anspruchs 1. Bei diesem Verfahren wird die Benetzungshöhe eines Mischbechers in einem Zentrifugalmischer überwacht. Hierbei wird unter der Benetzungshöhe diejenige Höhe verstanden, bis zu der sich im Betrieb ein in dem Mischbecher befindliches Medium aufgrund der vorhandenen Zentrifugalkräfte maximal erstreckt. Ist beispielsweise die Benetzungshöhe größer als die Höhe der Innenwand des Mischbechers, so tritt im Betrieb Medium aus dem Inneren des Mischbechers aus. Bei dem erfindungsgemäßen Verfahren wird der mit Medien befüllte Mischbecher um zwei schräg zueinander verlaufende Drehachsen (insbesondere gegensinnig) in Rotation versetzt, und zwar mit Hilfe eines ersten Antriebs und eines zweiten Antriebs, wobei die beiden Antriebe unabhängig voneinander ansteuerbar sind bzw. angesteuert werden. Weiterhin wird die Benetzungshöhe innerhalb des Mischbechers mit Hilfe einer Bilderfassungseinrichtung optisch erfasst. Mit einer Steuerung werden dann die beiden Antriebe derart angesteuert, dass eine vorgegebene Benetzungshöhe erreicht und/oder nicht überschritten wird. Dies kann durch Einstellen der Drehzahl des ersten und/oder des zweiten Antriebs erfolgen. Durch die optische Erfassung der Benetzungshöhe und die daraus resultierende Ansteuerung der Antriebe des Zentrifugalmischers lässt sich ein Austreten von Medium aus dem Mischbecher im Betrieb zuverlässig verhindern. Gleichzeitig können die Antriebe derart angesteuert werden, dass eine möglichst gute Durchmischung der in dem Mischbecher befindlichen Medien erfolgt, indem diese mit einer maximal zulässigen Drehzahl angetrieben werden. Auch lässt sich die Menge des in dem Mischbecher zu mischenden Mediums optimieren, indem beispielsweise die Neigung des Mischbechers verringert, jedoch die Benetzungshöhe im Betrieb maximiert wird.

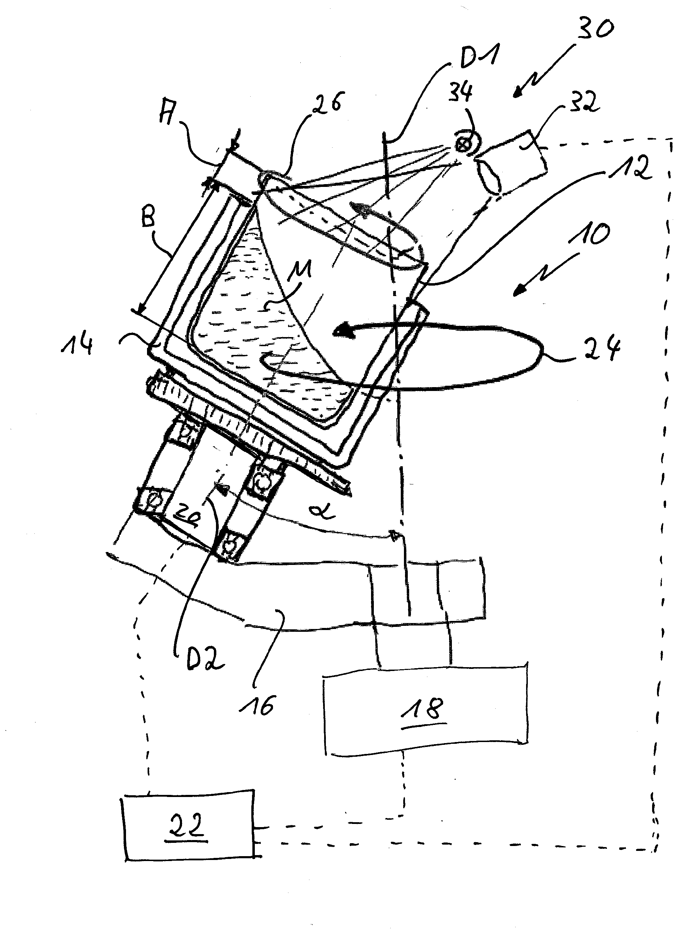

Vorteilhafte Ausführungsformen der Erfindung sind in der Beschreibung, der Zeichnung und den Unteransprüchen beschrieben.

Nach einer ersten vorteilhaften Ausführungsform besteht die Möglichkeit, in die Steuerung eine maximale Benetzungshöhe einzugeben. Hierdurch kann mit Hilfe der Steuerung sichergestellt werden, dass eine vorgegebene Benetzungshöhe erreicht und/oder die maximale Benetzungshöhe nicht überschritten wird, indem die Drehzahl des ersten und/oder des zweiten Antriebs entsprechend eingestellt wird.

Nach einer weiteren vorteilhaften Ausführungsform kann die Steuerung die Benetzungshöhe auf einen vorgegebenen Sollwert regeln. Sollte sich deshalb die Dichte bzw. das Volumen des Mediums innerhalb des Mischbechers ändern, beispielsweise aufgrund einer Entgasung, so kann die vorgegebene Benetzungshöhe durch Regeln der Drehzahl des ersten und/oder des zweiten Antriebs beibehalten werden.

Nach einer weiteren vorteilhaften Ausführungsform kann die Bilderfassungseinrichtung einen stationären Bildsensor aufweisen, beispielsweise eine Kamera, mit der ein Bild des Inneren des Mischbechers erfasst wird. Hierzu kann der Mischbecher mit einer gepulsten Lichtquelle beleuchtet werden, die mit zumindest einem der Antriebe synchronisiert ist. Hierdurch lässt sich ein mit der Drehung des Mischbechers synchronisiertes Standbild erzeugen, das wiederum von der Bilderfassungseinrichtung ausgewertet werden kann, um die tatsächlich vorhandene Benetzungshöhe innerhalb des Mischbechers zu ermitteln. Weiter kann es vorteilhaft sein, wenn von der Lichtquelle Strahlung ausgesendet wird, die zumindest zwei, insbesondere zumindest drei unterschiedliche Farbtemperaturmaxima aufweist. Da in dem Mischbecher üblicherweise unterschiedliche Medien gemischt werden, die nicht immer mit nur einer Wellenlänge gleich gut zu erkennen sind, ermöglicht eine Beleuchtung mit unterschiedlichen Farben, zum Beispiel RGB, eine zuverlässigere Ermittlung der Benetzungshöhe.

Nach einer weiteren vorteilhaften Ausführungsform kann mit Hilfe einer optischen Temperaturerfassungseinrichtung, beispielsweise einer Infrarotmesseinrichtung, die Temperatur eines Mediums in dem Mischbecher erfasst werden, wobei durch die Steuerung die Drehzahl zumindest eines Antriebs so geregelt wird, dass eine vorgegebene Maximaltemperatur nicht erreicht oder nicht überschritten wird. In diesem Fall wird auf Basis der Temperaturmessung die Drehgeschwindigkeit des Mischbechers gesteuert bzw. geregelt, um eine für das Medium spezifische Temperatur zu erreichen oder eine für das Medium kritische Temperatur nicht zu überschreiten.

Nach einem weiteren Aspekt betrifft die vorliegende Erfindung eine Vorrichtung, umfassend einen Zentrifugalmischer mit zumindest einem Mischbecher, der von einem ersten und einem zweiten Antrieb um zwei schräg zueinander verlaufende Drehachsen in Rotation versetzbar ist. Weiterhin ist eine Bilderfassungseinrichtung vorhanden, mit der eine Benetzungshöhe innerhalb Mischbechers erfassbar ist. Eine Steuerung der Vorrichtung ist derart ausgebildet und eingerichtet, dass diese die Drehzahl des ersten und/oder des zweiten Antriebs derart einstellt, insbesondere derart regelt, dass eine vorgegebene Benetzungshöhe erreicht und insbesondere nicht überschritten wird.

Nachfolgend wird die vorliegende Erfindung rein beispielhaft anhand einer vorteilhaften Ausführungsform beschrieben. Hierbei versteht sich, dass nicht sämtliche Merkmale der beschriebenen vorteilhaften Ausführungsform als erfindungswesentlich anzusehen sind.

Die Figur zeigt eine stark vereinfachte Darstellung eines Zentrifugalmischers 10, der einen Mischbecher 12 um zwei schräg zueinander verlaufende Drehachsen D1 und D2 in Rotation versetzen kann. Hierzu ist der Mischbecher 12 in eine Halterung 14 eingesetzt, die auf einem Dreharm 16 befestigt ist, der wiederum von einem ersten Antrieb 18 um die Drehachse D1 gedreht werden kann. Die Drehachse D1 kann vertikal orientiert sein. Der Dreharm 16 ist jedoch abgewinkelt, so dass die Mittelachse des Mischbechers 12, die mit der Drehachse D2 identisch sein kann, unter einem spitzen Winkel α zur ersten Drehachse D1 verläuft. Der Mischbecher 12 ist also bei dem Ausführungsbeispiel schräg zur Vertikalen orientiert.

Auf dem Dreharm 16 ist ein zweiter Antrieb 20 vorgesehen, mit dem die Halterung 14 und damit auch der Mischbecher 12 um die zweite Drehachse D2 in Rotation versetzt werden kann.

Die Ansteuerung der beiden Antriebe 18 und 20 erfolgt über eine Steuerung 22, wobei die Steuerung 22 beispielsweise über Schleifringe mit dem sich um die Achse D1 drehenden Antrieb 20 verbunden ist.

Im Betrieb dreht sich der Dreharm 16 um die Drehachse D1, wodurch auf Medien M, die sich innerhalb des Mischbechers 12 befinden, eine Zentrifugalkraft wirkt. Für die Drehung um die Achse D1 kann die Drehzahl bzw. die Drehgeschwindigkeit, die mit dem Pfeil 24 angedeutet ist, über einen weiten Bereich geregelt werden. Abhängig von dieser Drehgeschwindigkeit nimmt die Oberfläche der Medien M innerhalb des Mischbechers 12 die Form eines Rotationsparaboloids ein. Die Form der Oberfläche der Medien innerhalb des Mischbechers 12 ist proportional zur Drehzahl und unabhängig von der Viskosität der Medien, solange der Mischbecher 12 gleichzeitig um die Achse D2 gedreht wird. Die Drehgeschwindigkeit um die Achse D2 ist durch das Bezugszeichen 26 angedeutet. Diese Drehgeschwindigkeit bzw. die Drehzahl des zweiten Antriebs 20 beeinflusst ebenfalls die maximale Höhe, die die Medien M innerhalb des Mischbechers 12 einnehmen. Diese ist in der Figur mit dem Bezugszeichen B bezeichnet und in der vorliegenden Anmeldung als Benetzungshöhe bezeichnet.

Bei der dargestellten Ausführungsform ist durch den Neigungswinkel α des Mischbechers 12 festgelegt, wie voll der Mischbecher 12 im Ruhezustand sein kann und welche maximale Drehgeschwindigkeit um die Drehachse D1 möglich ist, um kein Medium aus dem Mischbecher 12 austreten zu lassen. Ohne eine Regelung für die Drehzahl der Antriebe 18 und 20 kann ein Winkel α in der Größenordnung von 45° geeignet sein. Für größere Füllmengen kann es jedoch vorteilhaft sein, die Drehgeschwindigkeiten der beiden Antriebe 18 und 20 individuell einzustellen und zu regeln, wodurch der Winkel α geringer gewählt werden kann, was wiederum größere Füllmengen ermöglicht.

Wie die Figur verdeutlich, sollte zwischen dem oberen Rand des Mischbechers 12 und dem in dem Mischbecher 12 befindlichen Medium M ein Mindestabstand A vorhanden sein, um zu verhindern, dass Medium aus dem Mischbecher austritt. Hierbei ist klar, dass die Benetzungshöhe B dadurch maximiert werden kann, dass der Mindestabstand A verringert wird. Um im laufenden Betrieb sicherzustellen, dass einerseits eine gewünschte Benetzungshöhe B erreicht und andererseits ein Mindestabstand A eingehalten wird, ist bei dem dargestellten Ausführungsbeispiel eine Bilderfassungseinrichtung 30 vorgesehen, mit der die Benetzungshöhe B innerhalb des Mischbechers 12 erfassbar ist. Hierzu weist die Bilderfassungseinrichtung einen stationären Bildsensor 32 auf, beispielsweise eine Digitalkamera, der ein Bild des Inneren des Mischbechers 12 erfasst und mit Hilfe einer Bildauswertungssoftware die tatsächliche maximale Höhe des Mediums M innerhalb des Mischbechers 12, d.h. die Benetzungshöhe B, ermittelt. Um trotz des um zwei Achsen rotierenden Mischbechers 12 eine gute Bildauswertung zu ermöglichen, ist ferner eine gepulste Lichtquelle 34 vorgesehen, die zumindest einen Teil des Inneren des Mischbechers 12 beleuchtet, wobei die Lichtquelle 34 mit zumindest einem der Antriebe 18, 20 synchronisiert ist, um ein Standbild zu erzeugen, das ausgewertet werden kann. Hierzu wird die Lichtquelle 34 nach Art eines Stroboskops gepulst betrieben, wobei der Synchronimpuls zur Steuerung der Lichtquelle 34 und der Kamera 32 beispielsweise durch einen Schaltkontakt oder einen Drehgeber der Antriebe 18 und/oder 20 erzeugt werden kann.

Bei dem dargestellten Ausführungsbeispiel kann es vorteilhaft sein, wenn die Lichtquelle 32 Strahlung aussendet, die mehrere unterschiedliche Farben aufweist, beispielsweise zumindest zwei, insbesondere zumindest drei unterschiedliche Farbtemperaturmaxima, um verschiedene Medien innerhalb des Mischbechers 12 gut erkennen zu können.

Weiterhin kann eine optische Temperaturerfassungseinrichtung vorgesehen sein, welche die Temperatur des Mediums M in dem Mischbecher 12 erfasst, wobei die optische Temperaturerfassungseinrichtung mit der Steuerung 22 gekoppelt sein kann, so dass diese die Drehzahl zumindest eines Antriebs 18, 20 derart regelt, dass eine vorgegebene Maximaltemperatur des Mediums M nicht erreicht oder nicht überschritten wird.

Bei einem erfindungsgemäßen Verfahren zur Überwachung der Benetzungshöhe B eines Mischbechers 12 in einem Zentrifugalmischer wird der mit verschiedenen Medien M befüllte Mischbecher 12 mit Hilfe des ersten Antriebs 18 um die erste Drehachse D1 und mit Hilfe des zweiten Antriebs 20 um die zweite Drehachse D2 in Rotation versetzt, wobei die beiden Drehachsen um den Winkel α zueinander geneigt sind und die Drehungen insbesondere gegenläufig orientiert sind. Mit Hilfe der Bilderfassungseinrichtung 30 kann dann im Betrieb die Benetzungshöhe B innerhalb des Mischbechers 12 erfasst werden. Hierdurch wird es möglich, die Antriebe 18 und/oder 20 mit Hilfe der Steuerung 22 derart anzusteuern, dass durch Einstellen einer geeigneten Drehzahl des ersten und/oder des zweiten Antriebs 18, 20 eine vorgegebene Benetzungshöhe B erreicht wird. Auch kann die Steuerung 22 die Antriebe 18, 20 derartig ansteuern, dass die Benetzungshöhe B nicht überschritten wird, so dass stets ein Mindestabstand A vorhanden ist, damit kein Medium M aus dem Mischbecher 12 austritt.

## Patentansprüche

1. Verfahren zur Überwachung der Benetzungshöhe (B) eines Mischbechers (12) in einem Zentrifugalmischer, bei welchem Verfahren der mit Medien (M) befüllte Mischbecher (12) mit einem ersten und mit einem zweiten Antrieb um zwei schräg zueinander verlaufende Drehachsen (D1, D2) in Rotation versetzt wird, umfassend die folgenden Schritte:
optisches Erfassen der Benetzungshöhe (B) innerhalb des Mischbechers (12) mit Hilfe einer Bilderfassungseinrichtung (30),
Ansteuern der Antriebe (18, 20) durch eine Steuerung (22) derart, dass durch Einstellen der Drehzahl des ersten und/oder des zweiten Antriebs (18, 20) eine vorgegebene Benetzungshöhe (B) erreicht oder nicht überschritten wird.

2. Verfahren nach Anspruch 1,
**dadurch gekennzeichnet,**
**dass** in die Steuerung eine maximale Benetzungshöhe eingegeben wird.

3. Verfahren nach Anspruch 1 oder 2,
**dadurch gekennzeichnet,**
**dass** die Steuerung die Benetzungshöhe auf einen vorgegebenen Sollwert regelt.

4. Verfahren nach einem der vorstehenden Ansprüche,
**dadurch gekennzeichnet,**
**dass** die Bilderfassungseinrichtung (30) mit einem stationären Bildsensor (32) ein Bild des Mischbechers (12) erfasst, dass der Mischbecher (12) mit einer gepulsten Lichtquelle (34) beleuchtet wird, die mit zumindest einem der Antriebe (18, 20) synchronisiert ist, und dass von der Lichtquelle (34) Strahlung ausgesendet wird, die zumindest zwei, insbesondere zumindest drei unterschiedliche Farbtemperaturmaxima aufweist.

5. Verfahren nach einem der vorstehenden Ansprüche,
**dadurch gekennzeichnet,**
**dass** mit Hilfe einer optischen Temperaturerfassungseinrichtung die Temperatur eines Mediums (M) in dem Mischbecher (12) erfasst wird, und dass durch die Steuerung (22) die Drehzahl zumindest eines Antriebs (18, 20) so geregelt wird, dass eine vorgegebene Maximaltemperatur nicht erreicht oder nicht überschritten wird.

6. Vorrichtung, insbesondere zur Durchführung eines Verfahrens nach einem der vorstehenden Ansprüche, umfassend:
einen Zentrifugalmischer (10) mit zumindest einem Mischbecher, der von einem ersten und einem zweiten Antrieb um zwei schräg zueinander verlaufende Drehachsen (D1 D2) in Rotation versetzbar ist,
**gekennzeichnet durch**
eine Bilderfassungseinrichtung (30), mit der eine Benetzungshöhe (B) innerhalb des Mischbechers (12) erfassbar ist, und
eine Steuerung (22), von der die Drehzahl des ersten und/oder des zweiten Antriebs (18, 20) so eingestellt, insbesondere geregelt wird, dass eine vorgegebene Benetzungshöhe (B) erreicht und insbesondere nicht überschritten wird.

7. Vorrichtung nach Anspruch 6,
**dadurch gekennzeichnet,**
**dass** die Bilderfassungseinrichtung (30) einen stationären Bildsensor (32) aufweist, der ein Bild des Mischbechers (12) erfasst, dass eine gepulste Lichtquelle vorgesehen ist, die den Mischbecher (12) beleuchtet, und die mit zumindest einem der Antriebe (18, 20) synchronisiert ist, und dass die Lichtquelle (32) Strahlung aussendet, die zumindest zwei, insbesondere zumindest drei unterschiedliche Farbtemperaturmaxima aufweist.

8. Vorrichtung nach einem der vorstehenden Ansprüche 6 oder 7,
**dadurch gekennzeichnet,**
**dass** eine optische Temperaturerfassungseinrichtung vorgesehen ist, welche die Temperatur eines Mediums in dem Mischbecher (12) erfasst, und dass die Steuerung (22) eingerichtet ist, die Drehzahl zumindest eines Antriebs (18, 20) so zu regeln, dass eine vorgegebene Maximaltemperatur nicht erreicht oder nicht überschritten wird.

## Claims

1. A method for monitoring the wetting height (B) of a mixing cup (12) in a centrifugal mixer, in which method the mixing cup (12) filled with media (M) is set into rotation about two axes of rotation (D1, D2) extending obliquely to one another by a first drive and by a second drive, said method comprising the following steps:
optically detecting the wetting height (B) within the mixing cup (12) by means of an image acquisition device (30),
controlling the drives (18, 20) by a control (22) such that a predefined wetting height (B) is reached or is not exceeded by setting the rotational speed of the first and/or the second drive (18, 20).

2. A method according to claim 1,
**characterized in that**
a maximum wetting height is entered into the control.

3. A method according to claim 1 or claim 2,
**characterized in that**
the control regulates the wetting height to a predefined desired value.

4. A method according to any one of the preceding claims,
**characterized in that**
the image acquisition device (30) acquires an image of the mixing cup (12) using a stationary image sensor (32), **in that** the mixing cup (12) is illuminated by a pulsed light source (34) which is synchronized with at least one of the drives (18, 20), and **in that** radiation which has at least two different color temperature maxima, in particular at least three different color temperature maxima, is emitted by the light source (34).

5. A method according to any one of the preceding claims,
**characterized in that**
the temperature of a medium (M) in the mixing cup (12) is detected by means of an optical temperature detection device, and **in that** the rotational speed of at least one drive (18, 20) is regulated by the control (22) such that a predefined maximum temperature is not reached or not exceeded.

6. An apparatus, in particular for carrying out a method according to any one of the preceding claims, comprising:
a centrifugal mixer (10) comprising at least one mixing cup which can be set into rotation about two axes of rotation (D1, D2) extending obliquely to one another by a first and a second drive,
**characterized by**
an image acquisition device (30) by which a wetting height (B) within the mixing cup (12) can be detected, and
a control (22) by which the rotational speed of the first and/or the second drive (18, 20) is set, in particular regulated, such that a predefined wetting height (B) is reached and is in particular not exceeded.

7. An apparatus according to claim 6,
**characterized in that**
the image acquisition device (30) has a stationary image sensor (32) which acquires an image of the mixing cup (12), **in that** a pulsed light source is provided that illuminates the mixing cup (12) and that is synchronized with at least one of the drives (18, 20), and **in that** the light source (32) emits radiation which has at least two different color temperature maxima, in particular at least three different color temperature maxima.

8. A apparatus according to one of the preceding claims 6 or 7,
**characterized in that**
an optical temperature detection device is provided that detects the temperature of a medium in the mixing cup (12), and **in that** the control (22) is configured to regulate the rotational speed of at least one drive (18, 20) such that a predefined maximum temperature is not reached or not exceeded.

## Revendications

1. Procédé de surveillance du niveau de mouillage (B) d'un gobelet mélangeur (12) dans un mélangeur centrifuge, procédé dans lequel le gobelet mélangeur (12) rempli de milieux (M) est mis en rotation autour de deux axes de rotation (D1, D2), s'étendant en oblique l'un par rapport à l'autre, au moyen d'un premier et d'un deuxième entraînement, comprenant les étapes suivantes consistant à :
détecter par voie optique le niveau de mouillage (B) à l'intérieur du gobelet mélangeur (12) à l'aide d'un dispositif d'acquisition d'image (30),
commander les entraînements (18, 20) par une commande (22) de telle sorte qu'en ajustant la vitesse de rotation du premier et/ou du deuxième entraînement (18, 20), un niveau de mouillage (B) prédéfini soit atteint ou ne soit pas dépassé.

2. Procédé selon la revendication 1,
**caractérisé en ce que**
qu'un niveau de mouillage maximal est entré dans la commande.

3. Procédé selon la revendication 1 ou 2,
**caractérisé en ce que**
**en ce que** la commande règle le niveau de mouillage à une valeur de consigne prédéfinie.

4. Procédé selon l'une des revendications précédentes,
**caractérisé en ce que**
le dispositif d'acquisition d'image (30) acquiert une image du gobelet mélangeur (12) au moyen d'un capteur d'image (32) fixe, **en ce que** le gobelet mélangeur (12) est éclairé par une source de lumière pulsée (34) qui est synchronisée avec l'un au moins des entraînements (18, 20), et **en ce que** la source de lumière (34) émet un rayonnement qui présente au moins deux, en particulier au moins trois maxima de température de couleur différents.

5. Procédé selon l'une des revendications précédentes,
**caractérisé en ce que**
la température d'un milieu (M) dans le gobelet mélangeur (12) est détectée à l'aide d'un dispositif optique de détection de la température, et **en ce que** la vitesse de rotation d'au moins un entraînement (18, 20) est régulée par la commande (22) de telle sorte qu'une température maximale prédéfinie ne soit pas atteinte ou ne soit pas dépassée.

6. Dispositif, en particulier pour mettre en œuvre un procédé selon l'une des revendications précédentes, comprenant :
un mélangeur centrifuge (10) comprenant au moins un gobelet mélangeur qui peut être mis en rotation par un premier et un deuxième entraînement autour de deux axes de rotation (D,1 D2) s'étendant en oblique l'un par rapport à l'autre,
**caractérisé par**
un dispositif d'acquisition d'image (30) permettant de détecteur un niveau de mouillage (B) à l'intérieur du gobelet mélangeur (12), et
une commande (22) par laquelle la vitesse de rotation du premier et/ou du deuxième entraînement (18, 20) est ajustée, en particulier régulée, de telle sorte qu'un niveau de mouillage (B) prédéfini soit atteint et en particulier ne soit pas dépassé.

7. Dispositif selon la revendication 6,
**caractérisé en ce que**
le dispositif d'acquisition d'image (30) comprend un capteur d'image (32) fixe qui acquiert une image du gobelet mélangeur (12), **en ce qu'**il est prévu une source de lumière pulsée qui éclaire le gobelet mélangeur (12) et qui est synchronisée avec l'un au moins des entraînements (18, 20), et **en ce que** la source de lumière (32) émet un rayonnement qui présente au moins deux, en particulier au moins trois maxima de température de couleur différents.

8. Dispositif selon l'une des revendications précédentes 6 ou 7,
**caractérisé en ce que**
il est prévu un dispositif optique de détection de la température qui détecte la température d'un milieu dans le gobelet mélangeur (12), et **en ce que** la commande (22) est conçue pour réguler la vitesse de rotation d'au moins un entraînement (18, 20) de telle sorte qu'une température maximale prédéfinie ne soit pas atteinte ou ne soit pas dépassée.
